(19) Europäisches Patentamt / European Patent Office / Office européen des brevets

(11) **EP 2 356 260 B1**

(12) **EUROPEAN PATENT SPECIFICATION**

(45) Date of publication and mention of the grant of the patent:
**11.07.2018 Bulletin 2018/28**

(51) Int Cl.:
***B01D 67/00*** (2006.01)  ***B01D 71/02*** (2006.01)

(21) Application number: **09829638.7**

(22) Date of filing: **30.10.2009**

(86) International application number:
**PCT/US2009/062763**

(87) International publication number:
**WO 2010/062683 (03.06.2010 Gazette 2010/22)**

(54) **MEMBRANE STRUCTURE FOR MOLECULAR SEPARATIONS AND METHOD OF PRODUCTION**

MEMBRANSTRUKTUR FÜR MOLEKULARE TRENNUNGEN UND HERSTELLUNGSMETHODE

STRUCTURE A MEMBRANE POUR SÉPARATIONS MOLÉCULAIRES ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.10.2008 US 262164**

(43) Date of publication of application:
**17.08.2011 Bulletin 2011/33**

(73) Proprietor: **Cerahelix, Inc.**
**Orono ME 04473 (US)**

(72) Inventors:
• **BISHOP, Karl, D.**
**Orono, ME 04473 (US)**
• **KIRKMANN, Tyler, J.**
**Brewer, ME 04412 (US)**

(74) Representative: **Haseltine Lake LLP**
**Lincoln House, 5th Floor**
**300 High Holborn**
**London WC1V 7JH (GB)**

(56) References cited:
WO-A1-2004/016360    WO-A1-2005/108476
JP-A- 6 239 674       US-A- 5 716 526
US-A- 5 770 275       US-A1- 2002 142 172
US-A1- 2003 006 190   US-A1- 2003 157 248
US-A1- 2006 266 696   US-A1- 2006 278 158
US-A1- 2007 128 423   US-A1- 2007 251 389
US-A1- 2008 105 613   US-B1- 6 670 427

• **BEGINN U: "SUPRAMOLECULAR TEMPLATES AS POROGENES", ADVANCED MATERIALS, WILEY - V C H VERLAG GMBH & CO. KGAA, DE, vol. 10, no. 16, 10 November 1998 (1998-11-10), pages 1391-1394, XP000785449, ISSN: 0935-9648, DOI: 10.1002/(SICI)1521-4095(199811)10:16<1391: :AID-ADMA1391>3.3.CO;2-S**

**Description**

BACKGROUND OF THE INVENTION

A number of different structures are known for use in molecular separations. The size of the pores of the structure defines the upper limit of the dimensions of the molecules that can pass through it. For example, zeolites and microporous silica membranes have pore sizes of up to 9 angstroms. Mesoporous membranes have pore sizes which are 20 angstroms and larger. This leaves a gap between pore sizes of 9 and 20 angstroms which is not addressed sufficiently by current technology. Many important organic and biological molecules fall into this size range. The paucity of synthetic methods available for creating suitable structures having pore sizes within this range has limited the use of these structures in the separation of such molecules. WO2005/108476 A1 relates to a method for producing proton-conducting polymer electrolyte membrane. WO2004/016360 A1 relates to imprinting a substrate for separation of a target molecule from a fluid medium. US2003/157248 A1 relates to mesoporous materials and methods. Supra molecular templates as porogenes are disclosed by BEGINN U, Advanced Materials, Wiley = V C H Verlag GmbH & Co. KGAA DE, Vol. 10, no. 16, 10 November 1998, pp 1391-1394.

SUMMARY OF THE INVENTION

A process of producing a structure for molecular separations includes providing a plurality of template materials. The template materials are selected from biomolecules, biopolymers, polymers, or combinations thereof. A sieve material, suitable for producing a structure for molecular separations, is provided around the template materials. The template materials are positioned in an arrangement for leaving pores suitable for molecular separations. The template materials are removed to leave pores in the sieve material and produce the structure suitable for molecular separations.

An assembly for producing a structure for molecular separations includes a substrate and a plurality of template materials on the substrate. The template materials are selected from biomolecules, biopolymers, polymers, or combinations thereof. The template materials are positioned in an arrangement for leaving pores suitable for molecular separations when the template materials are removed. A sieve material is positioned on the substrate around the template materials. The sieve material has a composition and is shaped for producing the structure for molecular separations after removal of the template materials.

A membrane for molecular separations includes a membrane made from a suitable sieve material, the membrane having opposed major surfaces. The membrane has pores in at least one of the major surfaces. The pores have a diameter between 10 angstroms and 19 angstroms.

A process of producing a catalyst includes attaching catalytic materials to template materials. A catalyst substrate material is positioned around the template materials. The template materials are removed to leave pores in the catalyst substrate material, with the catalytic materials attached to the pores.

Various aspects of this invention will become apparent to those skilled in the art from the following detailed description of the preferred embodiments, when read in light of the accompanying drawings.

BRIEF DESCRIPTION OF THE DRAWINGS

Fig. 1A is a side view of an assembly for producing a ceramic membrane for molecular separations, including DNA molecules attached or unattached to a surface, and a ceramic material applied onto the surface and around the DNA to form a membrane.
Fig. 1B is a top view of the assembly.
Fig. 1C is a side view of the ceramic membrane on the surface after the DNA molecules have been removed to leave pores extending through the membrane.
Fig. 1D is a top view of the ceramic membrane.
Fig. 2 is a cross-section of a ceramic membrane before and after deposition of DNA-sol gel.
Fig. 3 is a detailed view of membrane material before calcination showing DNA self-aligned and oriented perpendicular to the surface.
Fig. 4 is a detailed view of the membrane material after calcination.
Fig. 5 illustrates the use of LCD optics for pore orientation of a DNA templated membrane controlled using an electric field.

DETAILED DESCRIPTION OF THE PREFERRED EMBODIMENTS

The invention relates to a process of producing an inorganic structure for molecular separations. The process includes providing a plurality of template materials. The template materials are selected from the group of DNAs. Any type of DNA can be used, including single-stranded DNA, double-stranded DNA, triple-stranded DNA, quadruplex DNA.

The double-stranded DNA molecule has physical and chemical characteristics that make it particularly suitable for use in the process. It has a diameter suitable for producing pores in an inorganic structure by the process as described below, and it has a length that can be controlled through means such as chemical synthesis and chemical manipulation by enzymes. DNA can be manipulated through external fields or through internal forces such as liquid crystalline formation or by attachment to surfaces using a variety of chemical and physical methods.

The template materials are provided in a sufficient number to leave pores in a structure effective for molecular separations as discussed below. The porosity of the ceramic material can vary widely, for example between 1% and 80%, depending on the particular structure and its application.

The process also includes providing a sieve material around the template materials. The sieve material can be any material that is suitable for producing the structure for molecular separations described herein, such as many of the materials typically used in molecular sieves. The sieve material may be thermally and chemically stable. In some embodiments, the sieve material may be a polymer or any other inorganic and/or organic material suitable for producing a molecular sieve.

In a particular embodiment, the sieve material is a material that produces a ceramic structure. The term ceramic refers to complex compounds and solid solutions of both metallic and nonmetallic elements joined by ionic and covalent bonds. Most often, ceramic materials are a combination of inorganic elements. Occasionally, ceramic materials may contain carbon. Examples of ceramic materials include but are not limited to metal oxides, compounds of metal oxides, metal carbides, and nitrides, and carbonates. More specifically, for example ceramic materials include but are not limited to silica, titania, alumina, titanium silicate, barium titanate, titanium carbide, titanium nitride, aluminum nitride, silicon carbide, and silicon nitride.

Methods of producing ceramic structures are well-known. For example, a sol-gel process uses ceramic precursors in solution. The precursor sol can be deposited to form a film or other structure, or cast in a suitable mold with the desired shape, and it forms a gel. The gel is subjected to thermal treatment and/or polymerization to form a solid ceramic structure.

In a particular example, the parameters determining sol-gel synthesis have been investigated. A criterion in the development of the DNA templated membrane is controlling the rate of sol-gel polymerization. In one embodiment, the DNA/sol-gel composite remains in a fluid state until it is placed in a magnetic (or electric) field wherein the DNA is given a chance to align. Once the alignment is complete the sol-gel may be polymerized quickly. Conditions such as pH, temperature, and solvent can influence polymerization rate. DNA has been encapsulated in a sol-gel, which polymerized in as short as 10 seconds and as long as 4 days.

The sieve material is formed into the desired shape of the structure for molecular separations. For example, this structure can be a membrane or other structure having any desired shape which can be either solid or hollow. In one embodiment, the sieve material is formed into a membrane by applying it onto a surface by any suitable method, such as pouring or spraying.

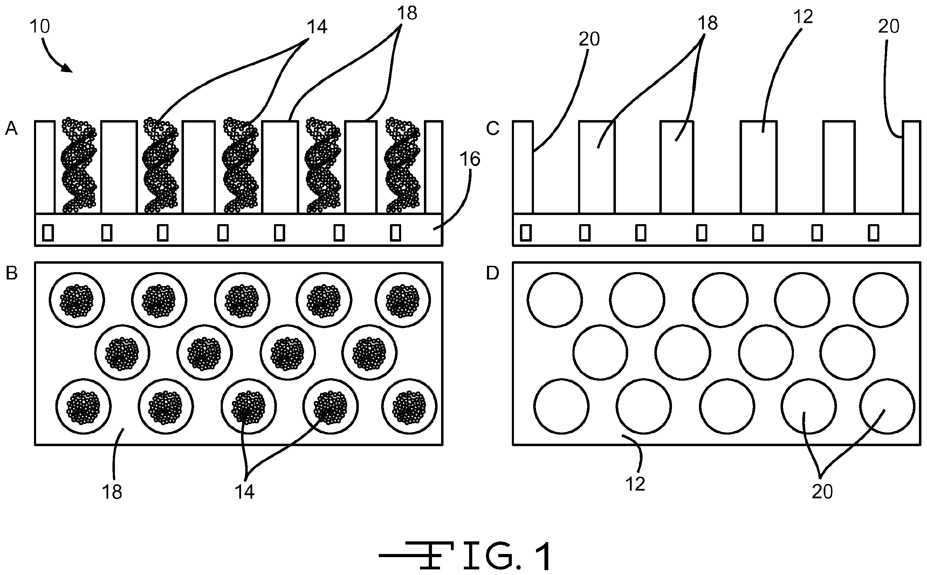

The sieve material is positioned around the template materials. This may include either partially or completely surrounding the template materials with the sieve material. For example, in one embodiment the template materials are surrounded on their sides but not on their ends with the sieve material. Fig. 1A and 1B shows an example of an assembly 10 for producing a ceramic membrane 12 for molecular separations. A plurality of DNA molecules 14 are attached to the surface of a substrate 16. The attachment of the DNA molecules to the surface can be accomplished using a variety of known attachment chemistries. The choice of attachment chemistry will depend on the conditions and specifications of the desired molecular separation membrane to be produced. A sol-gel 18 has been applied onto the substrate 16 and around the DNA molecules 14, the sol-gel surrounding the DNA molecules on their sides but not their ends.

In other examples, the template materials can be surrounded except for one end by the sieve material, or they can be encapsulated by the sieve material. For example, this may occur when the DNA molecules are mixed into a sol-gel, and then the sol-gel is formed into a desired structure for molecular separations.

The process also includes positioning the template materials in an arrangement for leaving pores suitable for molecular separations, after the template materials have been removed from the sieve material to leave pores as described below. This can include any suitable arrangement of the template materials relative to one another and relative to the molecular separations structure, and any suitable orientation or alignment of the template materials. In the example shown in Fig. 1A and 1B, the DNA molecules 14 are arranged in a regular pattern and are equally spaced relative to one another. Also, the DNA molecules 14 are oriented so that they extend generally perpendicular to the surface of the substrate 16 and generally parallel with one another. Alternatively, the DNA molecules could be positioned in a non-perpendicular and/or non-parallel orientation.

The orientation of the template materials can be achieved by any suitable method. For example, it may be achieved by the use of a magnetic or electric field applied to the DNA molecules, or by mechanical means, or by other physical conditions (concentration, application, etc.). The presence and composition of a surface and a variety of other conditions can also influence the orientation of the template materials. Under certain conditions the template materials may orient themselves without the use of external means. The positioning of the template materials in the desired arrangement can take place either before or after the sieve material has been positioned around the template materials. In some embodiments, the positioning results in a highly oriented monolayer of template materials on a surface.

The process further includes removing the template materials to leave pores in the sieve material and produce a structure suitable for molecular separations. For example, as shown in Fig. 1C and 1D, after the sol-gel 18 has hardened around the biopolymers to form a ceramic material, the DNA molecules 14 are removed to leave pores 20 in the ceramic material. The template materials can be removed by any suitable method. For example, they can be removed by calcining or any other known method.

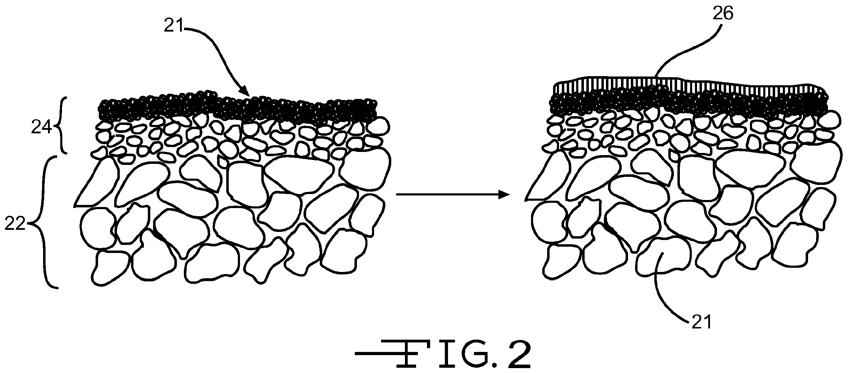

Figs. 2-4 illustrate a particular embodiment of a process according to the invention. As shown in Fig. 2, a commercially available ceramic membrane 21 includes a support layer 22 and intermediate layers 24. The intermediate layers are particles of alumina of smaller size than the support layer. They provide a more uniform surface onto which the sol gel layer can be added. The layers can have any suitable thickness; for example, the support layer 22 may have a thickness from 1 to 5 mm and the intermediate layers may have a combined thickness from 40 to 50 $\mu$m. The ceramic membrane is dip coated into liquid crystal DNA-sol gel. The DNA-sol gel forms a coating in the form of a membrane 26 on the ceramic membrane 21.

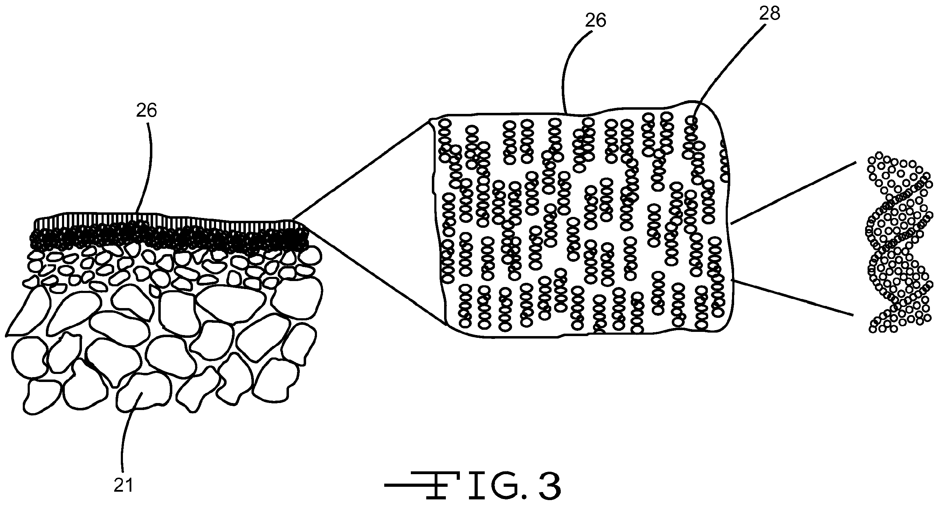

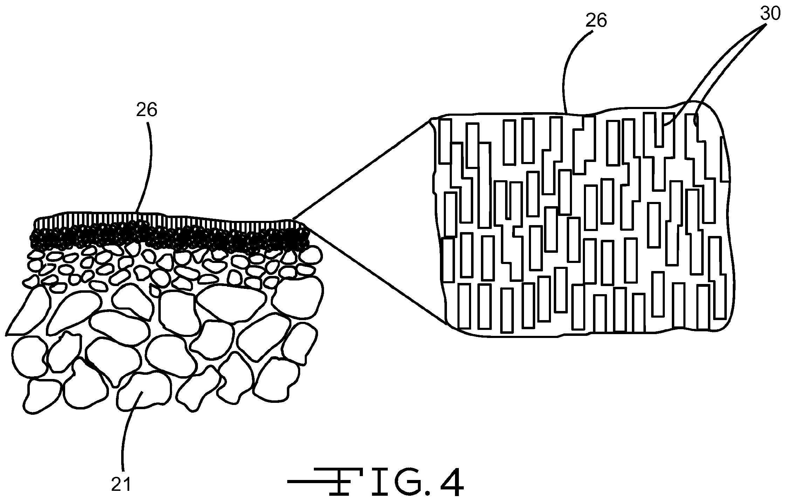

Fig. 3 shows both a cross-section of the ceramic membrane 21 and the DNA-sol gel membrane 26, and a top view of the DNA-sol gel membrane 26. The DNA are self-aligned and oriented perpendicular to the surface. Fig. 4 shows the membrane 26 after the DNA have been removed by calcination, leaving pores 30 in the membrane.

In one embodiment, the process includes an additional step, after removing the template materials to leave the pores, of reducing the diameter of the pores in a controlled fashion. The ability to reduce the diameter of the pores in a controlled fashion could make an entire range of desired pore sizes available. The diameter of the pores can be reduced by any suitable means, for example, by atomic layer deposition or other known methods. This step could also provide the capability of modifying the surface of the pores to provide desired physical and chemical characteristics.

In another embodiment, the process includes an additional step of attaching catalytic materials to the template materials before providing the sieve material around the template materials, and leaving the catalytic materials attached to the pores when the template materials are removed. The use of catalytic materials is described in more detail below.

The invention also relates to an assembly for producing a structure for molecular separations. The assembly includes a substrate, and a plurality of template materials such as those described above on the substrate. The template materials are positioned in an arrangement for leaving pores suitable for molecular separations when the template materials are removed. The assembly also includes a sieve material positioned on the substrate around the template materials, the sieve material having a composition and being shaped for producing the structure for molecular separations after removal of the template materials.

The substrate can be any suitable platform upon which the structure for molecular separations can be produced. For instance, the substrate may be an alumina support. In the example shown in Fig. 1, the assembly 10 includes the substrate 16 which has a surface upon which the sieve material 18 is shaped to produce a membrane 12 for molecular separations.

In another embodiment (not shown), the substrate is a second membrane different from the molecular separations membrane. For instance, as described in the example below, the substrate can be a different filtration membrane, such as a tubular ceramic nanofiltration membrane, or it can be any other suitable membrane having a different function and/or structure. Optionally, the second membrane can be combined with the molecular separations membrane to produce a combination membrane that provides different separations and/or functions.

In another embodiment, the assembly further includes catalytic materials attached to the biopolymers. Such catalytic materials are described in more detail below.

The invention also relates to a membrane for molecular separations. The membrane is made from a sieve material and it has opposed major surfaces. The membrane has pores in at least one of the major surfaces, the pores extending generally perpendicular to the major surface. In some embodiments, the pores extend completely through the membrane between the major surfaces. Most previously known molecular separation membranes have randomly oriented pores that interconnect allowing molecules to eventually find a path through the membrane. The membrane of the invention thus provides an advantage over current technology. The back pressure or pressure drop across the membrane is very low, and the molecules have an easy path through the membrane.

The pores in the membrane can have any diameter suitable for molecular separations. By "diameter" is meant the diameter of the pore if it is circular in cross-section, or the smallest diameter of the pore if it is not circular and thus has different diameters. The pores have a diameter between 5 angstroms and 30 angstroms. In a particular embodiment, the pores have a diameter between 10 angstroms and 19 angstroms, and more particularly between 12 angstroms and 17 angstroms.

In some embodiments, the pores are substantially uniform or homogeneous in size, cross-section, orientation and/or in other properties or structures.

The pores can be oriented perpendicular to the major surface of the membrane, or they can be oriented non-perpendicularly. The pores are oriented parallel with one another.

The pores can be included in any suitable total numbers and in any suitable numbers per unit area of the membrane. The membrane porosity can be controlled by controlling template material concentration and/or surface density. In some embodiments, the pores are included in an ordered pattern. In some embodiments, the pores are substantially evenly spaced on the membrane surface. Pore density can influence membrane sturdiness. Lower pore density will provide greater average spacing between pores. The spacing will be occupied by membrane material thereby increasing the sturdiness of the membrane.

The membrane can have any thickness suitable for molecular separations. In some embodiments, it has a thickness within a range of from about 0.1 micron to about 100 microns. An ultra-thin membrane can be useful for high throughput.

In some embodiments, the membrane further includes catalytic materials attached to the pores.

The membrane can be useful in many different types of molecular separations, including molecular separations of gases from their mixtures, and molecular separations of chemicals from a liquid. Potential customers are biorefineries which convert woody biomass to sugars, organic acids, and alcohols. Current membrane technologies can separate the sugars from acetic acid and furfurals. However, a new membrane technology is needed which will separate furfural compounds from acetic acid. A great advantage of molecular separation by membranes rather than distillation is lower cost primarily in energy savings. Other industries in which the membrane could be used include oil and petrochemical, coal gasification, pulp and paper, and natural gas producers.

The invention also relates to a process of producing a catalyst. The process includes attaching catalytic materials to template materials, positioning a catalyst substrate material around the template materials, and removing the template materials to leave pores in the catalyst substrate material, with the catalytic materials attached to the pores.

Any suitable catalytic materials can be used, such as metal atoms, metal ions or metal oxides. Suitable catalytic metals are well known, such as platinum, beryllium, rhodium, etc. Combinations of two or more catalytic materials can also be used. Also, any suitable template materials can be used, such as any of those described above or others. Further, any suitable catalyst substrate material can be used. It can be a ceramic material such as described above or any other material known for use as a catalyst substrate.

In some embodiments, the template materials are positioned on a surface, and the catalyst substrate material is applied onto the surface and around the template materials. This usually shapes the catalyst into the form of a membrane. However, other embodiments do not use a surface and/or produce catalysts with different shapes.

The catalytic materials are attached to locations on the template materials, which can be predetermined or random locations. Typically, when the template materials are removed from the catalyst substrate material, the catalytic materials are attached to corresponding locations on the pores of the substrate. In some embodiments, two or more different catalytic materials are attached to each of the template materials, so that when the template materials are removed the two or more catalytic materials are attached to the pores.

In some embodiments, the pores are positioned so that the catalyst also functions as a molecular sieve, but in other embodiments it functions solely as a catalyst.

Metal ions bind to nucleic acids through ionic and/or covalent interactions with the phosphodiester backbone or the aromatic rings. This property can be used with the membrane templating innovation described above to produce membranes with pore structures with surfaces which are decorated with metal atoms or ions. It is conceivable that a variety of physical and chemical characteristics (e.g., selective molecular binding, catalytic activity, etc.) can be chosen based on the metals bound to the template material prior to templating the membrane.

In a particular example, DNA can be used as a means to distribute metals in the pores of the membrane. Several transition metal (platinum, rhodium, rhenium, etc.) compounds bind to DNA. If these metal compounds are bound to the DNA when the DNA is used in templating a membrane it is possible to create a new class of catalysts with a high degree of control of composition (catalyst cluster size and distribution). The advantages would be improved dispersal of the catalyst and the ability to create well-defined binary (e.g., Pt-Rh) or ternary (e.g., Pt-Rh-Re) or higher complexity catalysts with very unique properties. Another advantage would be the ability to create not just a catalyst but also a material that could perform separation and catalysis simultaneously.

In another particular example, a catalyst can be made that is not restricted to a layer or film. A bulk sol gel material with metal-DNA complexes encapsulated within it is made. The DNA is removed by high temperatures (calcining) leaving behind a ceramic material with random or aligned pore orientation but decorated metal catalytic sites (metal atoms, ions, or oxides). This material could then be further processed and utilized as a catalyst.

EXAMPLE 1

A ceramic membrane for molecular separations (hereinafter "molecular separations membrane") is produced as follows. A tubular ceramic nanofiltration membrane (hereinafter "nanofiltration membrane") is used as a substrate for forming the molecular separations membrane. The nanofiltration membrane is dipped into a sol-gel which contains DNA molecules, forming a coating on the nanofiltration membrane. The sol-gel coated nanofiltration membrane is then placed in a strong magnetic field which aligns the DNA molecules perpendicular to the surface of the nanofiltration membrane while the sol-gel polymerizes and forms a ceramic membrane. Once the sol-gel is solidified, the DNA molecules are removed by calcining, leaving pores in the ceramic membrane producing the molecular separations membrane.

The result is a combination ceramic membrane which includes a tubular nanofiltration membrane coated with a molecular separations membrane. The combination membrane has the high selectivity of the molecular separations membrane and the utility of the nanofiltration membrane. The molecular separations membrane allows separation of very small molecules (1 nm to 2 nm) from larger molecules.

The combination ceramic membrane may be used in a variety of different applications. For example, it may be used in a cross-flow filtration process in which the feed stream moves parallel to the membrane filtration surface. Molecules larger than the pore size of the molecular separations membrane will pass through the long channels of the tubular nanofiltration membrane. The small molecules will pass through the molecular separations membrane as part of the permeate. An example of an application of this technology would be in the area of biorefinery commodity chemical separation.

EXAMPLE 2

Task 1 - Formation of Liquid Crystalline DNA in a Sol-Gel:

i. Rationale: The liquid crystalline state is a phase of matter that is ordered like crystalline solids but flows like a liquid. High density packing of polyanions like DNA can only be accomplished if the charge-charge repulsion of the phosphate groups is minimized by the addition of counterions. The structure of a hexagonal liquid crystalline phase of 150 base pair lengths of double-stranded DNA has been studied by small angle neutron scattering (Dai 2007). In this study, hexagonal phase liquid crystalline monovalent tetramethylammonium (TMA$^+$) ions were used as counterions to facilitate the formation of the liquid crystalline state. The spacing between the long axes of the DNA in this state was determined to be 4 nm. Segments of DNA up to 100 persistent lengths (~5 $\mu$m) were shown to exhibit local hexagonal structure.

ii. Experimental Design and Methods: Several lengths of DNA ranging from 150 base pairs to 2000 base pairs can be produced by nuclease digestion of calf thymus DNA with subsequent separation by size exclusion chromatography. Design of Experiments (DoE) has been used to elucidate the optimum experimental conditions under which DNA will form a liquid crystalline state in the presence of the sol-gel. A table of 28 samples to be synthesized and screened has been generated.

Input factors for this study include DNA concentration, sol-gel reactants, temperature, and pH. An experimental matrix was generated based on a D-Optimal design (NIST/SEMATECH, 2006). Because of the large number of possible conditions it was not practical to run a full factorial design. The D-optimal design option is an effective way to spread the points in experimental space to generate informative, non-redundant results. The upper and lower bounds defined the ranges which encompass the optimum conditions to form a sol-gel liquid crystalline DNA composite material. The synthesis could also utilize cationic molecules which are similar to TMA but are known to facilitate the formation of liquid crystalline DNA (e.g., spermine, spermidine, and putrescine). The formation of the liquid crystalline state of DNA in the presence of sol-gel forming compounds could prove to be difficult. The Design of Experiments method (DoE) to select the optimum parameters described in this step will help establish optimum synthesis conditions.

iii. Data Analysis and Interpretation: Once the DNA templated material is formed it will be characterized using a variety of methods. DNA absorbs UV light very strongly having an extinction coefficient of 6600 M$^{-1}$ cm$^{-1}$ at 260 nm. If the DNA is encapsulated in the porous material there will be a strong UV absorbance of the material after extensive washing. Scanning electron microscopy will be conducted at the Laboratory for Surface Science and Technology, will be used to confirm the presence of any long range order. Successful synthesis will be confirmed through the observation of hexagonal phase order of channels up to about 7 $\mu$m in length. Xray diffraction (XRD) and AFM will be utilized to determine the ordered state of the material. Previous XRD results of materials that have highly uniform pores with long range ordering (Kim 2001) will be compared to the results obtained for *Task 1 (ii).* The final step of *Task 1* will be to remove the DNA. This will be done by calcining which is a common process for template destruction used in zeolite synthesis by heating to high temperature in the presence of air. The sample DNA/sol-gel composite will be heated in the presence of air to remove the DNA. The optimum temperature will be the minimum temperature necessary to completely remove the DNA. Characterization of the porous material was performed by XRD as described above. A new method to estimate surface area of porous silica using FT-IR will be employed (McCool 2006).

iv. Potential Problems/Alternative Approaches: Removal of the DNA by calcining may introduce pore defects. The rate at which the sample is heated and cooled is can affect template removal and prevention of defects in the membrane (Dong 1998). Various temperature ramping protocols may be investigated. Chemical detachment or breakdown of the DNA are options to be explored should the calcining process prove detrimental to the membrane channels.

v. Outcomes: Data analysis showed that DNA has been successfully encapsulated in silica. The DNA-silica composite was ordered along the long axis of the DNA. Once the optimum conditions for removing DNA from the DNA-silica composite are determined, a highly porous ceramic material will be generated. The parallel pore structure of this new material will be visualized by electron microscopy.

EXAMPLE 3

Synthesis of a DNA Templated Membrane

An innovation of using DNA as a template is the potential to manipulate it and create pores perpendicular to the membrane surface. The alignment of the membrane pores is dependent on the alignment of the DNA before calcination. Several methods for DNA alignment will be considered. The optimal method is that which is the easiest to implement in a cost-effective manner with respect to scale-up of the technology. Once an alignment methodology has been established in aqueous environments, the alignment procedures will be verified in the presence of the sol-gel starting materials. Success will be determined by the solidification of oriented liquid crystalline DNA in a sol-gel, which will be verified by cross-polarized microscopy.

***Experimental Design and Methods***

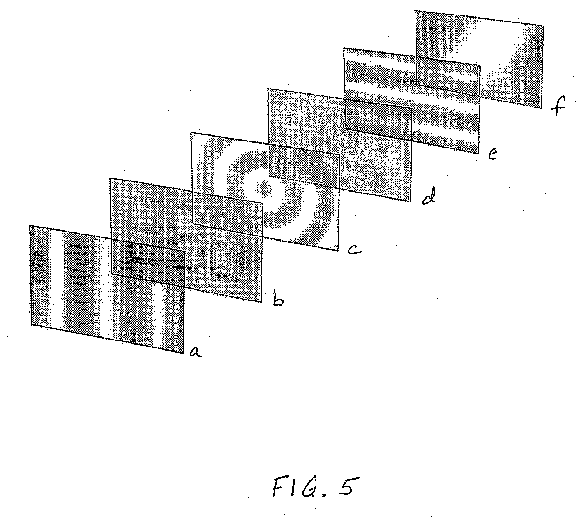

The following parameters will be adjusted to obtain the optimum pore orientation on a nonporous support:
*Concentration of DNA.* The liquid crystalline phase is dependent on DNA concentration. The long range ordering of the DNA is dictated by the liquid crystalline phase. Therefore, manipulation of the DNA concentration in the sol-gel will be the first parameter to be adjusted to induce the proper alignment.
*Solvent Conditions.* The upper limit to DNA solubility is dependent on solvent conditions.
The sol-gel in which the DNA is dissolved acts as the solvent. The parameters of the solvent that can be manipulated are pH, salt concentration, ethanol concentration, and water concentration.
*Surface Modification.* DNA is a negatively charged polymer. It is possible that the DNA strands will overcome the aligning forces to form various liquid crystalline phases and lie down on the surface of the substrate. This would inhibit the ability of the DNA to form pores that would allow molecular transfer across the membrane. Therefore, a method to inhibit the interaction of the DNA with the surface may be needed. Organosilane chemistry has been used to reduce the polarity (increase hydrophobicity) of silica (Alami-Younssi 1998, Sah 2004). DNA will have a reduced interaction directly with the surface. The result could allow the forces that induce alignment in the various liquid crystalline phases to orient the DNA more perpendicularly to the surface.
*Electric Field.* Pore orientation of the DNA templated membrane can be controlled using an electric field. It is known that the orientation of DNA can be manipulated by an electric field (Germishuizen 2003, Borejdo 1989, Suzuki 1998). Electric field orientation methodology is based on liquid crystal display (LCD) technology. A solution of DNA will be sandwiched between two ITO-coated (indium-tin-oxide) glass slides similar to the concept shown in Figure 5. Orientation of the DNA molecules will be controlled by an electric field generated between the ITO electrodes. Changes in the liquid crystalline orientation of DNA will be monitored by cross-polarized light microscopy.
Figure 5 shows the use of LCD optics. Multilayer composition of an LCD disclay is used as a model for creating electric field orientational test for liquid crystalline DNA. The DNA occupies a thin film in layer C of the image. Layers B and D are glass substrates with conductive ITO coating. Layers A and E, which have the light polarizing films, represent the crossed polarizing lenses of a light microscope.
In particular, Layer A in Figure 5 is a vertical filter film to polarize the light as it enters. Layer B is a glass substrate with indium tin oxide electrodes. The shapes of these electrodes will determine the dark shapes that will appear when the LCD is turned on. Vertical ridges are etched on the surface so the liquid crystals are in line with the polarized light. Layer C is twisted nematic liquid crystals. Layer D is a glass substrate with common electrode film (ITO) with horizontal ridges to line up with the horizontal filter. Layer E is a horizontal filter film to block/allow light through. Layer F is a reflective surface to send light back to the viewer.
For the first three methods described, a solution of DNA will be sandwiched between a glass slide and a cover slip. When the electric field alignment method is attempted, a solution of DNA will be sandwiched between two ITO-coated (indium-tin-oxide) glass slides.

***Data Analysis and Interpretation***

Each of the different methods will produce a layer of polymerized silica sol-gel with DNA encapsulated within the matrix. Long-range order such as a liquid crystalline state will exhibit birefringence as polarized light passes through the ordered material. Liquid crystalline states of DNA exhibit unique birefringence patterns. Digital images of the patterns produced by varying DNA concentration, solvent conditions, surface modification, and the electrical potential between the electrodes will be stored on a computer which is connected to Zeomatrix' polarizing light microscope equipped with a digital camera.
Identification of the various phases of liquid crystalline DNA-sol-gel composites will use two different imaging methods - light microscopy (LM) and scanning electron microscopy (SEM). LM images acquired from the liquid crystalline states of the DNA as a function of the various conditions will be compared to published images of known liquid crystalline phases of DNA (Strzelecka 1988) to identify precholesteric, cholesteric, and smectic phases similar to Phase I results obtained by Zeomatrix. SEM images processed using NIH Image J software (NIH) will be used to evaluate the ordered structure of the DNA. Spatial arrangements, area, mean, centroids, perimeters, can all be measured using this software package. SEM cross-sectional images will be used to investigate pore alignment. Analysis of the SEM image data using tools within NIH Image software should provide the ability to measure average orientation of the DNA with respect to the substrate surface.

### iv. Potential Problems/Alternative Approaches

Potential Problem: Electric field not sufficient to induce pore alignment in sol gel. Solution: Try alternate alignment procedure(s):

An alternate method of pore alignment includes chemically bonding ends of the double stranded fish sperm DNA to the surface by a method which was initially developed to attach single stranded DNA to alumina (Saprigin 2004). Amino silane N-(2-aminomethyl)-3-aminopropyl trimethoxysilane (AEAPS) can be used to silanize the surface of the alumina substrate. The terminal primary amine of the AEAPS will covalently bond to the terminal phosphate of the DNA through a carbodiimide crosslinking mechanism. The result will be a single layer of double stranded fish sperm DNA with a length of -100 base pairs with one end attached to the surface. There may be a tendency for the DNA to lie down on the surface, which contains primary amines, since these amines are positively charged at neutral pH and the DNA is negatively charged. This effect will be minimized by pretreating the DNA with a positively charged amino silane. The amino silane aminopropyltriethoxysilane (APTES) will also facilitate formation of the sol-gel close to the DNA molecules. The attached monolayer of DNA will be too thin to perform as an effective separations membrane, but instead will act as a directing agent for aligning a subsequent layer of liquid crystalline DNA templated material.

### v. Expected Outcomes

We anticipate long range ordering of the DNA on the surface. The DNA is likely to be oriented at an angle less than 90°. If the average angle is greater than 40° with respect to the surface, the pores that will result from the removal of the DNA should allow efficient molecular transfer. We expect Task 1 to take 8 months. Zeomatrix personnel Susan MacKay, Karl Bishop and Tyler Kirkmann will be involved.

### Task 2 - Dip coat and characterize a templated Z-SEP™ membrane on a porous support.

#### i. Rationale

The Phase I/IB project developed both the template and dip coating methods needed to form a DNA templated membrane. The development work was performed using glass slides as the support for the membrane. The prototype membrane will be supported by a porous material with the following characteristics: planar, composed of a ceramic material, multilayered with macroporous, mesoporous, and microporous zones. For the prototype development Zeomatrix will use γ-alumina supports provided by Inocermic GmbH, and coating procedures developed during Phase I/IB. The porous support will allow for measurements of pore alignment and flow rates. Membrane properties such as single gas permeance, pore size distribution, porosity, and selective layer thickness will also be studied. It is anticipated that the conditions for dip coating a porous support may not be the same as the nonporous support due to different surface adhesion properties. The porous support will be purchased from Inocermic GmbH. The composite alumina supports will be 2 cm in diameter, 3 mm thick, with an average pore diameter of 10 nm. These supports are comprised of a 10 nm porous γ-alumina on top of more porous alpha-alumina layers. The Z-SEP™ prototype membranes will be formed by dip coating the porous support into encapsulated DNA sol-gel precursor solution which has been prepared as per the methodology developed during Phase I/IB. The membranes will be dried and then calcined as per the methodology developed for Phase I/IB. Additional methodology will need to be developed for the final process which will involve sintering of the Z-SEP™ layer to the underlying support. This methodology development is broken out into a separate task (Task 3).

### ii. Experimental Design and Methods

### Step 1. Dip Coating

Zeomatrix will work with a consultant, Prof. William DeSisto, on this phase of the research. Prof. DeSisto has 9 years experience in dip coating and characterizing supported templated membranes (Higgins 2006, Kennard 2008). The procedure employed by Zeomatrix is adapted from procedures he uses in his research, and will consist of submerging the support into a solution of liquid crystalline DNA sol-gel material. Initial dip coating work during Phase I/IB was done using apparatus in Prof. DeSisto's laboratory at the University of Maine. Phase II work will be performed at the Zeomatrix facility using custom-built equipment which will allow for more precise and reproducible "draws" of the support through the sol-gel solution. The support is allowed to rest in the material for several seconds allowing the sol-gel to adhere to the surface. The support is then withdrawn at a constant predetermined rate producing a membrane layer of uniform thickness. Thickness is influenced by sol-gel viscosity as well as withdrawal speed (Brinker and Hurd 1994). Membrane defects can be introduced during the drying step. Therefore, the evaporation rate will be regulated by performing the dip coating process within a temperature and humidity controlled chamber purchased from Electro-Tech Systems, Inc. A remotely controlled motor will be set up within the environmental chamber to provide precise and reproducible control of the dip coating speed and angle.

***Step 2 Calcining:*** Calcining will be performed at Zeomatrix using the procedure established in Phase I/IB. After this step the membranes will be characterized to determine the average pore size, pore size distribution, pore alignment, extent of defects, and membrane thickness.

### iii. Data Analysis and Interpretation

Membrane thickness will be measured by cross-sectional imaging using SEM. Adsorption branch hexane porosimetry or permporometry (Clark 2003, Cao 1993, Cuperus 1992) will be used to quantify defects and measure average pore size and pore size distribution. This method measures the active pores (ones that traverse the membrane) by measuring the controlled blocking of pores by a condensable vapor and measuring the flux of another noncondensible gas through the membrane. Partial vapor pressure of hexane is varied over a wide range to act as the blocking agent. Helium gas flow rate is measured as a function of hexane activity (hexane vapor pressure normalized to saturation pressure of hexane). The activity of hexane is related to pore size, $R_p$, using the Kelvin equation where $\sigma$ is the surface tension of hexane, $V_m$, is the molar volume of hexane, R is the gas constant, $T$ is the temperature, $a$ is hexane activity, and $t$ is the thickness of the adsorbed monolayer (Cuperus 1992).

$$R_P = \frac{-4\sigma V_m}{RT \ln(a)} + t$$

The Kelvin equation governs how condensation occurs in larger pores as hexane vapor is exposed to the membrane. The pore size distribution, $f(R_p)$ will be calculated using the following relationship where $l$ is the membrane thickness, $M$ is the molecular weight of the permeate, and $F$ is the permeance of the inert gas based on the expression for Knudsen transport (Cao 1993).

$$f(R_p) = \frac{-3l}{2R_p^3} \sqrt{\frac{MRT}{8\pi}} \frac{dF}{dR_p}$$

Single gas permeation measurements will determine the permeance of the membrane. Single gas permeance will also be used to quantify defect flow by measuring the fraction of viscous flow through the membrane (Kumar 2008, Xu 2004). The quality of the membrane is determined by plotting the permeance against the average pressure drop across the membrane. Defects from cracks or pinholes in the selective layer will be evident with a positive dependence of permeance on the average pressure drop. Viscous flow will bypass the selective pores and pass through the defects. These measurements are standard techniques used to characterize ceramic membranes. The equipment to perform adsorption branch hexane porosimetry, gas permeance, and SEM are available in Bill DeSisto's laboratory in the Department of Chemical and Biological Engineering and at the Laboratory for Surface Science and Technology at the University of Maine (LaSST) as per the Zeomatrix Facilities and Use Agreement.

### iv. Potential Problems/Alternative Approaches.

Dip coating procedure for the porous support may have to be changed significantly from the nonporous support. Systematic changes in the dip coating procedure (draw rate and humidity) will be performed to find a method that applies a relatively uniform layer in the desired thickness range of 1 to 5 microns as determined by SEM.

If the SEM at LaSST that we would use is not able to perform at the highest resolution needed, then Zeomatrix will use an outside analytical lab for the SEM image analysis.

### v. Expected Outcomes

Expected outcomes are: deposition of a 1 to 5 micron thick membrane on a porous support with a mean pore size in the 1 to 3 nanometer range, $N_2$ gas permeance on the order of $10^{-6}$ mol m$^{-2}$ s$^{-1}$ Pa$^{-1}$, and a percentage of flow due to defects at less than 10%.

Task 2 encompasses the ongoing membrane characterization which needs to be performed throughout the entire project. It should take 18 months. Zeomatrix personnel Susan MacKay, Tyler Kirkmann and Karl Bishop will be involved as well as consultant Dr. William De-Sisto.

### Task 3 - Minimize defects in prototype Z-SEP™ membrane.

*i. Rationale* Defects in the Z-SEP™ membrane such as cracks or delamination from the substrate must be resolved before the next phase of the project can begin. Defect formation can occur during the dip-coating/drying or calcining/sintering steps. Defects must be minimal in order to evaluate the Z-SEP™ membrane during the pervaporation test (Task 4). Higher flux rates combined with better separation factors will be achieved when molecular flow occurs primarily through the membrane pores, and not through the larger, less selective defects.

*ii. Experimental Design and Methods*

The selective silica membrane layer must be bonded to the substrate. Sintering is a common method for achieving this, however maintaining the pore dimensions will limit the sintering temperature. The temperature at which pores begin to change structure in porous silica membranes starts around 600°C (Tatsu 2005). In order to avoid pore collapse the removal of the DNA must be done at the lowest possible temperature. Thermogravimetric analysis (TGA) will allow the monitoring of the change in mass of a sample as it is heated. Once the DNA has been completely removed this will set the lowest temperature needed to remove the DNA. Attenuated total reflectance Fourier Transform Infrared spectroscopy (ATR-FT-IR) permits the analysis of the chemical composition of solid materials on a surface and will be used to monitor the composition of the membrane. Higher temperatures will be used to sinter the membrane. The membrane pore characteristics will be monitored as a function of sintering temperature. These experiments can be performed in Prof. DeSisto's lab at the University of Maine. These temperatures provide us with an operating range in which to determine optimum sintering temperatures for the Z-SEP™ product. The elimination of defects is the goal of this step. Cracking, lifting, and delamination of the selective layer are real possibilities.

Defects in a membrane can be minimized by applying multiple coats of the selective layer (Higgins 2006). After each dip coat the membrane is calcined and the process is repeated. However, a thicker selective layer can limit characteristics of membrane performance such as flux. Also, if the layer becomes too thick the membrane will also have a tendency to form cracks upon drying or calcining. An optimum thickness can be found between these two extremes. After a layer is applied by the dip coating method and dried subsequent layers will be applied by repeating the same process. The membranes will be carefully dried, calcined, and characterized as described above. The relationship between number of dipcoats and defects, permeance, and pore size distribution will be established. This procedure will determine the best compromise between defects and membrane performance limit the defects but it will also reduce the permeance of the membrane by increasing the selective layer thickness. Analysis of the relationship between membrane thickness and gas permeance will be tested by measuring single gas permeance through a range of membranes of varying thickness.

Defect formation from the dip coating process can be affected by the membrane thickness (withdrawal rate), drying rate (humidity controlled), and sol gel chemistry. A reduction in the number of defects will be verified by a decrease in hexane porosimetry baseline. The parameters of the dip coating procedure will be studied as they relate to the formation of defects in the deposited membrane. Gas flow through defects will be tested by hexane porosimetry after dip coating experiments and before calcination to show improvements in the dip coating process.

A measure of defects will be performed on a set of membranes calcined following the procedures developed in phase IB and will show the effects of calcining temperature and heating rate on defect formation. Membrane defects allow molecular flow that bypasses the pore structure resulting in an increase in flow with an increase in pressure. This effect will be observed by monitoring the relationship between permeance and pressure drop across the membrane, DP. A positive slope indicates the presence of defects. Calcining and sintering will thereafter be carried out in the same step. The furnace temperature will be ramped up to the calcination temperature and held for a period of time to allow completion of calcination. The temperature will be raised further to complete the sintering step. A set of experiments will be performed on a series of identical membranes sintered in a programmable furnace and will study the effects of calcining and sintering temperatures and heating rates. The membranes will be analyzed by hexane porosimetry at LaSST to provide the percentage of gas flow through defects. These results will allow us to optimize the heating parameters to minimize defect formation during the calcining and sintering steps.

The efficacy of DNA alignment on membrane performance will be determined. Templated membranes with and without alignment will be produced and evaluated to determine defects, permeance, and pore size distribution.

### iii. Data Analysis and Interpretation

ATR-FTIR spectra will give evidence for the presence or removal of the DNA templating material. The same data analysis and interpretation for pore characteristics, permeance, and defects as outlined in Task 2 will be applied to Task 3. The different approach in this Task is the systematic application of procedures to minimize defects. As the pressure is increased, any observed increase in permeance will be due to gas flow through defects. Permeance will be graphed as a function of pressure drop, $\Delta P$, across the membrane. A positive slope indicates the presence of defects. A slope zero for permeance vs. $\Delta P$ indicates the absence of defects. Reduction in the number and extent of defects will result in a *decrease* in the slope of the permeance vs $\Delta P$ line.

### iv. Potential Problems/Alternative Approaches

Problem: Elimination of defects causes dramatic reduction in membrane permeance. This could be due to multiple dip coat method. It is possible that after calcining a membrane layer to remove the DNA template the pores left behind get plugged with the next sol-gel dip.
Solution: Try calcining after multiple dip coats are complete.

*v. Expected* Outcomes

Our goal will be a membrane with less than 5% defect flow as measured by light gas porosimetry.

**Claims**

1.   A process of producing a structure for molecular separations comprising:

attaching a plurality of DNA molecules (14) as template materials to a surface;
providing a sieve material (18) suitable for producing a structure for molecular separations around the template materials;
applying the sieve material (18) onto the surface and around the DNA molecules (14) in an arrangement for leaving pores (20) suitable for molecular separations; and
removing the template materials to leave pores (20) shaped by a DNA molecule, each pore having a diameter between 5 angstroms and 30 angstroms in the sieve material (18) that orient parallel to one another and produce the structure suitable for molecular separations.

2.   The process of claim 1 wherein the template materials are positioned before providing the sieve material (18) around the template materials.

3.   The process of claim 1 wherein the sieve material (18) is formed into a membrane (12) and the template materials are positioned to leave pores (20) generally perpendicular to a surface of the membrane (12).

4.   The process of claim 1 wherein the sieve material (18) produces a ceramic structure.

5.   The process of claim 1 comprising the additional steps of attaching catalytic materials to the template materials before providing the sieve material (18) around the template materials, and leaving the catalytic materials attached to the pores (20) when the template materials are removed, optionally wherein the catalytic materials are metal atoms, metal ions or metal oxides.

6.   An assembly for producing a structure for molecular separations comprising:

a substrate (16);
a plurality of DNA molecules (14) as template materials on the substrate (16), wherein the DNA molecules (14) are attached to a surface, and the template materials positioned in an arrangement for leaving pores (20) shaped by a DNA molecule, each pore having a diameter between 5 angstroms and 30 angstroms that orient parallel to one another and that are suitable for molecular separations when the template materials are removed; and
a sieve material (18) positioned on the substrate (16) around the template materials, the sieve material (18) having a composition and being shaped for producing the structure for molecular separations after removal of the template materials.

7.   The assembly of claim 6 wherein the substrate (16) has a surface upon which the sieve material (18) is positioned.

8.   The assembly of claim 6 further comprising catalytic materials attached to the template materials, optionally wherein the catalytic materials are metal atoms, metal ions or metal oxides.

9.   A membrane (12) for molecular separations comprising:

a membrane (12) made from a sieve material (18), the membrane (12) having opposed major surfaces;
the membrane (12) having pores (20) oriented parallel to each other in at least one of the major surfaces, **characterized in that** the pores (20) are being shaped by a DNA molecule, each pore having a diameter between 5 angstroms and 30 angstroms formed by a template material which is DNA molecules (14).

10.   The membrane (12) of claim 9 wherein the sieve material (18) is a ceramic material.

11.   The membrane (12) of claim 9 wherein the membrane has a thickness within a range of from about 0.1 micron to about 100 microns.

12.   The membrane (12) of claim 9 wherein the pores (20) are substantially uniform in size.

13.   The membrane (12) of claim 10 further comprising catalytic materials attached to the pores (20), optionally wherein the catalytic materials are metal atoms, metal ions or metal oxides.

**Patentansprüche**

1.   Verfahren für die Herstellung eines Gefüges für molekulare Trennungen, umfassend:

das Anfügen einer Mehrzahl von DNA-Molekülen (14) als Matrizenmaterialien an eine Oberfläche;

das Bereitstellen eines Siebmaterials (18), das zum Herstellen eines Gefüges für molekulare Trennungen um die Matrizenmaterialien herum geeignet ist;

das Aufbringen des Siebmaterials (18) auf die Oberfläche und um die DNA-Moleküle (14) herum in einer Anordnung, um die Poren (20) für molekulare Trennungen geeignet zu lassen; und

das Entfernen der Matrizenmaterialien, um Poren (20) durch ein DNA-Molekül gestaltet zu hinterlassen, wobei jede Pore einen Durchmesser zwischen 5 Angström und 30 Angström in dem Siebmaterial (18) aufweist, die parallel zueinander orientiert sind und das Gefüge herstellen, das für molekulare Trennungen geeignet ist.

2. Verfahren nach Anspruch 1, wobei die Matrizenmaterialien vor dem Bereitstellen des Siebmaterials (18) um die Matrizenmaterialien positioniert werden.

3. Verfahren nach Anspruch 1, wobei das Siebmaterial (18) zu einer Membran (12) gebildet wird und die Matrizenmaterialien so positioniert werden, dass die Poren (20) im Allgemeinen senkrecht zu einer Oberfläche der Membran (12) hinterlassen werden.

4. Verfahren nach Anspruch 1, wobei das Siebmaterial (18) ein Keramikgefüge herstellt.

5. Verfahren nach Anspruch 1, umfassend die zusätzlichen Schritte des Anfügens katalytischer Materialien an die Matrizenmaterialien, bevor das Siebmaterial (18) um die Matrizenmaterialien bereitgestellt wird, und des Angefügtlassens der katalytischen Materialien an die Poren (20), wenn die Matrizenmaterialien entfernt werden, wobei wahlweise die katalytischen Materialien Metallatome, Metallionen oder Metalloxide sind.

6. Anordnung zum Herstellen eines Gefüges für molekulare Trennungen, umfassend:

ein Substrat (16);

eine Mehrzahl von DNA-Molekülen (14) als Matrizenmaterialien auf dem Substrat (16), wobei die DNA-Moleküle (14) an eine Oberfläche angefügt sind und die Matrizenmaterialien in einer Anordnung zum Gestaltetseinlassen der Poren (20) durch ein DNA-Molekül positioniert sind, wobei jede Poren einen Durchmesser zwischen 5 Angström und 30 Angström aufweist, die parallel zueinander orientiert sind und die für molekulare Trennungen geeignet sind, wenn die Matrizenmaterialien entfernt werden; und

ein Siebmaterial (18), das auf dem Substrat (16) um die Matrizenmaterialien herum positioniert ist, wobei das Siebmaterial (18) eine Zusammensetzung aufweist und zum Herstellen des Gefüges für molekulare Trennungen nach Entfernung der Matrizenmaterialien gestaltet ist.

7. Anordnung nach Anspruch 6, wobei das Substrat (16) eine Oberfläche aufweist, auf die das Siebmaterial (18) positioniert ist.

8. Anordnung nach Anspruch 6, ferner katalytischen Materialien, die an die Matrizenmaterialien angefügt sind, umfassend, wobei wahlweise die katalytischen Materialien Metallatome, Metallionen oder Metalloxide sind.

9. Membran (12) für molekulare Trennungen, umfassend:

eine Membran (12), die aus einem Siebmaterial (18) hergestellt ist, wobei die Membran (12) entgegengesetzte Hauptflächen aufweist; wobei die Membran (12) Poren (20) aufweist, die parallel zueinander in mindestens einer der Hauptflächen orientiert sind, **dadurch gekennzeichnet, dass** die Poren (20) durch ein DNA-Molekül gestaltet sind, wobei jede Pore einen Durchmesser zwischen 5 Angström und 30 Angström aufweist und durch ein Matrizenmaterial gebildet ist, das aus DNA-Molekülen (14) besteht.

10. Membran (12) nach Anspruch 9, wobei das Siebmaterial (18) ein Keramikmaterial ist.

11. Membran (12) nach Anspruch 9, wobei die Membran eine Dicke innerhalb eines Bereichs von etwa 0,1 Mikron bis etwa 100 Mikron aufweist.

12. Membran (12) nach Anspruch 9, wobei die Poren (20) im Wesentlichen größenmäßig gleichförmig sind.

13. Membran (12) nach Anspruch 10, ferner katalytische Materialien umfassend, die an die Poren (20) angefügt sind, wobei wahlweise die katalytischen Materialien Metallatome, Metallionen oder Metalloxide sind.

**Revendications**

1. Procédé de production d'une structure pour des séparations moléculaires comprenant :

l'attachement d'une pluralité de molécules d'ADN (14) en tant que matériaux de matrice à une surface ;
la mise à disposition d'un matériau de tamisage (18) approprié pour produire une structure pour des séparations moléculaires autour des matériaux de matrice ;

l'application du matériau de tamisage (18) sur la surface et autour des molécules d'ADN (14) dans une disposition permettant de laisser des pores (20) appropriés pour des séparations moléculaires ; et

l'élimination des matériaux de matrice afin de laisser des pores (20) formés par une molécule d'ADN, chaque pore possédant un diamètre compris entre 5 angströms et 30 angströms dans le matériau de tamisage (18), qui s'orientent de manière parallèle les uns aux autres et produisent la structure appropriée pour des séparations moléculaires.

2. Procédé selon la revendication 1, dans lequel les matériaux de matrice sont positionnés avant de mettre à disposition le matériau de tamisage (18) autour des matériaux de matrice.

3. Procédé selon la revendication 1, dans lequel le matériau de tamisage (18) est formé en une membrane (12) et les matériaux de matrice sont positionnés afin de laisser des pores (20) généralement perpendiculaires à une surface de la membrane (12).

4. Procédé selon la revendication 1, dans lequel le matériau de tamisage (18) produit une structure de céramique.

5. Procédé selon la revendication 1, comprenant les étapes supplémentaires consistant à attacher des matériaux catalytiques aux matériaux de matrice avant de mettre à disposition le matériau de tamisage (18) autour des matériaux de matrice, et à laisser les matériaux catalytiques attachés aux pores (20) lorsque les matériaux de matrice sont éliminés, facultativement où les matériaux catalytiques sont des atomes métalliques, des ions métalliques ou des oxydes métalliques.

6. Assemblage pour produire une structure pour des séparations moléculaires comprenant :

un substrat (16) ;

une pluralité de molécules d'ADN (14) en tant que matériaux de matrice sur le substrat (16), où les molécules d'ADN (14) sont attachées à une surface, et les matériaux de matrice sont positionnés dans une disposition permettant de laisser des pores (20) formés par une molécule d'ADN, chaque pore possédant un diamètre compris entre 5 angströms et 30 angströms, qui s'orientent de manière parallèle les uns aux autres et qui sont appropriés pour des séparations moléculaires lorsque les matériaux de matrice sont éliminés ; et

un matériau de tamisage (18) positionné sur le substrat (16) autour des matériaux de matrice, le matériau de tamisage (18) possédant une composition et étant formé pour produire la structure pour des séparations moléculaires après l'élimination des matériaux de matrice.

7. Assemblage selon la revendication 6, où le substrat (16) possède une surface sur laquelle le matériau de tamisage (18) est positionné.

8. Assemblage selon la revendication 6, comprenant en outre des matériaux catalytiques attachés aux matériaux de matrice, facultativement où les matériaux catalytiques sont des atomes métalliques, des ions métalliques ou des oxydes métalliques.

9. Membrane (12) pour des séparations moléculaires comprenant :

une membrane (12) fabriquée à partir d'un matériau de tamisage (18), la membrane (12) comportant des surfaces majeures opposées ;

la membrane (12) possédant des pores (20) orientés de manière parallèle les uns aux autres dans au moins une des surfaces majeures, **caractérisés en ce que** les pores (20) sont formés par une molécule d'ADN, chaque pore possédant un diamètre compris entre 5 angströms et 30 angströms formé par un matériau de matrice qui est une molécule d'ADN (14).

10. Membrane (12) selon la revendication 9, où le matériau de tamisage (18) est un matériau de céramique.

11. Membrane (12) selon la revendication 9, où la membrane possède une épaisseur comprise dans une plage d'environ 0,1 micron à environ 100 microns.

12. Membrane (12) selon la revendication 9, dans laquelle les pores (20) ont une taille essentiellement uniforme.

13. Membrane (12) selon la revendication 10, comprenant en outre des matériaux catalytiques attachés aux pores (20), facultativement où les matériaux catalytiques sont des atomes métalliques, des ions métalliques ou des oxydes métalliques.

FIG. 1

FIG.2

FIG.3

FIG.4

EP 2 356 260 B1

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005108476 A1
- WO 2004016360 A1

- US 2003157248 A1

**Non-patent literature cited in the description**

- **BEGINN U.** Advanced Materials. Wiley = V C H Verlag GmbH & Co, 10 November 1998, vol. 10, 1391-1394